# DEMANDE DE BREVET EUROPEEN

(11) **EP 3 382 399 A1**
(43) Date de publication de la demande: **03.10.2018**
(21) Numéro de dépôt: 18164004.6
(22) Date de dépôt: 26.03.2018
(51) Int. Cl.: G01P 13/00

(54) **DISPOSITIF DE DÉTECTION D'UN PASSAGE DE GRAISSE ET SYSTÈME DE GRAISSAGE ASSOCIÉ**

(30) Priorité: 31.03.2017 FR 1752734
(71) Demandeur: NTN-SNR Roulements, 74000 Annecy (FR)
(72) Inventeur: POLLIER, Vivien, 74650 CHAVANOD (FR)
(74) Mandataire: Alatis

(57) **Abrégé**

Un dispositif de détection (18) d'un passage de graisse comporte une chambre de détection (28), présentant un orifice d'entrée (34) et un orifice de sortie (36), un codeur (44) supporté par un porte-codeur(42), mobile dans la chambre de détection (28) au moins entre une première position et une deuxième position, un organe de rappel (54) vers la première position et un capteur (50) détectant la position du codeur (44). Une chambre cylindrique d'admission (26) constitue un passage de graisse entre un orifice d'admission (30) et l'orifice d'entrée dans la chambre de détection (34). Un obturateur (58) séparé d'un port-codeur et en appui contre le porte-codeur est mobile axialement entre une position d'obturation à l'intérieur de la chambre cylindrique d'admission (26) et une position d'ouverture au moins partiellement dans la chambre de détection (28), et obture le passage de graisse entre l'orifice d'admission (30) et l'orifice d'entrée dans la chambre de détection (34) lorsqu'il se trouve dans la chambre cylindrique d'admission (26). Le codeur (44) est poussé par l'obturateur de la première à la deuxième position.Le porte-codeur (42) comporte un siège de maintien (60) pour maintenir l'obturateur (58), par exemple une bille, dans la position d'ouverture lorsque le codeur (44) est dans la deuxième position.

## Description

### DOMAINE TECHNIQUE DE L'INVENTION

L'invention se rapporte à un dispositif de détection d'un passage de graisse, qui est destiné à délivrer au moins une information binaire sur la présence ou nom d'un transfert de graisse entre un orifice d'admission et un orifice de sortie.

### ÉTAT DE LA TECHNIQUE ANTÉRIEURE

Dans de nombreuses installations industrielles, il est souhaitable de pouvoir contrôler à distance qu'un passage de graisse par une conduite a bien eu lieu conformément à un fonctionnement normal de l'installation et n'a pas été entravé par un événement non contrôlé, par exemple une rupture de la conduite ou un dysfonctionnement de l'alimentation de la conduite. Tel est le cas par exemple de la maintenance préventive, et notamment du graissage des machines, qui est réalisé au moyen de graisseurs répartis dans un atelier, chaque graisseur pouvant être affecté à un ou plusieurs points de graissage sur une ou plusieurs machines, et situé à proximité ou non des points de graissage. Pour prévenir les risques liés à un dysfonctionnement du graissage, on souhaite un contrôle de chaque graisseur, voire de chaque point de graissage. On cherche alors à disposer de détecteurs de passage de graisse robustes et fiables dans un environnement industriel, mais dont le coût de revient et de fonctionnement doit être faible, car le nombre de conduites à surveiller est élevé.

On connaît des débitmètres, qui peuvent fournir une information précise sur le débit d'un fluide qui les traverse. Par exemple, le document WO 2009/090375 illustre un débitmètre comportant un dispositif à piston mobile axialement dans une chambre contenant un liquide, le piston étant associé à un aimant permanent placé devant un capteur délivrant un signal représentatif du mouvement linéaire du piston. Un ressort sollicite le piston vers une position de repos, dans laquelle le piston obture un orifice d'admission de chambre. Le piston se déplace dans une partie tronconique de la chambre, de sorte que la section de passage disponible entre le piston et la paroi tronconique est une fonction croissante de l'éloignement du piston par rapport à sa position de repos. Mais un tel débitmètre reste complexe et ne répond pas à l'exigence de coût limité. En particulier, il nécessite un aimant ayant une induction rémanente élevée, du type à terres rares, car le volume disponible pour le logement de l'aimant est faible. Par ailleurs, le capteur utilisé est sensible, car relativement éloigné de l'aimant, et doit être positionné avec précision. Enfin, un tel débitmètre n'est pas adapté au passage d'un corps pâteux, tel qu'une graisse.

### EXPOSÉ DE L'INVENTION

L'invention vise à remédier aux inconvénients de l'état de la technique et à proposer un dispositif de détection d'un passage de graisse, dont la structure permette l'emploi de composants simples, et notamment au niveau du capteur et du codeur mobile dont le déplacement est détecté.

Pour ce faire est proposé, selon un premier aspect de l'invention, un dispositif de détection d'un passage de graisse, comportant :
- un corps comprenant une paroi cylindrique de guidage délimitant une chambre de détection et définissant un axe de détection, le corps comprenant un orifice d'entrée dans la chambre de détection, un orifice de sortie de la chambre de détection, un orifice d'admission et une chambre cylindrique d'admission débouchant dans la chambre de détection par l'orifice d'entrée dans la chambre de détection et constituant un passage de graisse entre l'orifice d'admission et l'orifice d'entrée dans la chambre de détection,
- un codeur supporté par un porte-codeur en contact glissant avec une paroi cylindrique de guidage de la chambre de détection pour guider le codeur axialement dans la chambre de détection au moins entre une première position et une deuxième position,
- un organe de rappel élastique rappelant le codeur vers la première position,
- un capteur solidaire du corps et apte à générer un signal électrique lorsque le codeur passe de la première position à la deuxième position,
- un obturateur, séparé du porte-codeur, en appui contre le porte-codeur, et mobile axialement entre une position d'obturation à l'intérieur de la chambre cylindrique d'admission et une position d'ouverture au moins partiellement dans la chambre de détection, le codeur étant positionné par rapport à l'obturateur de sorte que l'obturateur se déplaçant de la position d'obturation vers la position d'ouverture, pousse le codeur de la première position à la deuxième position, et que le codeur se déplaçant de la deuxième position à la première position, pousse l'obturateur de la position d'ouverture à la position d'obturation, les dimensions de l'obturateur et de la chambre cylindrique d'admission étant telles que l'obturateur obture le passage de graisse entre l'orifice d'admission et l'orifice d'entrée dans la chambre de détection lorsqu'il se trouve dans la chambre cylindrique d'admission, le porte-codeur comportant un siège de maintien, pour maintenir l'obturateur dans la position d'ouverture lorsque le codeur est dans la deuxième position.

Le dispositif de détection ainsi défini a vocation à être disposé entre un distributeur de graisse, par exemple un graisseur, branché sur l'orifice d'admission et un récepteur de graisse, par exemple un organe de machine, branché sur l'orifice de sortie. En service, le distributeur de graisse génère de temps à autre une impulsion de distribution de graisse, qui se traduit par une montée en pression au niveau de l'orifice d'admission, qui déplace l'obturateur de la position d'obturation à la position d'ouverture et permet le passage d'une quantité de graisse. La course de l'obturateur entre la position d'obturation et la position d'ouverture sur la longueur de la chambre cylindrique d'admission garantit une amplitude de mouvement suffisante au codeur entre la première position et la deuxième position. On peut dès lors choisir un ensemble capteur-codeur de sensibilité relativement faible et malgré tout détecter l'ouverture de l'obturateur. Elle permet notamment de compenser les effets d'hystérésis. L'amplitude de la course autorise par ailleurs des tolérances élargies sur le positionnement du capteur. Elle permet de compenser la variabilité de comportement d'un capteur à l'autre, et, pour un même capteur, la variabilité de comportement pour différentes conditions d'utilisation, par exemple sur une plage de températures d'utilisation.

Le fait que l'obturateur soit séparé du porte codeur et en appui contre celui-ci confère une liberté de mouvement à l'obturateur par rapport au porte-codeur. On peut alors se contenter de tolérances élargies dans les cotes de la chambre de détection par rapport à celles de la chambre cylindrique d'admission.

De préférence, entre la position d'obturation et la position d'ouverture, l'obturateur parcourt une course d'au moins 3 mm, de préférence au moins 5 mm, de préférence au plus 10mm dans la chambre cylindrique d'admission. En pratique, une telle course permet d'utiliser un ensemble capteur-codeur simple, par exemple un codeur constitué d'un aimant permanent en acier ou en ferrite, et un capteur peu sensible.

Suivant un mode de réalisation, la chambre cylindrique d'admission à une section de passage d'aire inférieure à l'aire de l'orifice de sortie de la chambre de détection]. Les sections de passage de l'orifice d'admission et de l'orifice de sortie sont calibrés en fonction du circuit de graisse dans lequel le dispositif de détection est intégré. Ils peuvent notamment inclure une interface de branchement, par exemple un filetage intérieur ou extérieur. La section réduite de la chambre cylindrique d'admission permet de limiter la surface de l'obturateur sur laquelle s'exerce la pression présente au niveau de l'orifice d'admission. Le volume de graisse dans la chambre cylindrique d'admission est limité, ce qui permet de limiter également l'effort nécessaire pour repousser la graisse présente dans la chambre cylindrique d'admission et ramener le dispositif dans la première position, malgré la consistance de la graisse. Cet effort peut être fourni par un organe élastique dont la géométrie favorise le passage de la graisse, par exemple par un diamètre et un nombre de spires réduits. Enfin, un volume réduit dans la chambre cylindrique d'admission signifie également que l'on est en mesure de détecter le passage d'un volume de graisse très faible.

Suivant un mode de réalisation particulièrement avantageux, la chambre cylindrique d'admission a une section transversale circulaire, l'obturateur ayant une section transversale circulaire. Ainsi, aucune indexation angulaire de l'obturateur par rapport au corps n'est nécessaire lors du montage. Les risques de coincement en fonctionnement sont minimisés, et l'on peut le cas échéant laisser l'obturateur libre en rotation autour de l'axe de la chambre cylindrique d'admission. Suivant un mode de réalisation alternatif, la base de la chambre cylindrique est non cylindrique, par exemple elliptique ou polygonale, notamment si l'on souhaite éviter une rotation du codeur autour de l'axe de détection, notamment si une telle rotation est susceptible d'influencer la mesure par le capteur.

Suivant un mode de réalisation particulièrement avantageux, l'obturateur comporte une bille, de préférence une bille métallique, de préférence une bille d'acier. Les billes d'aciers sont des éléments mécaniques dont la production est parfaitement maîtrisée dans l'industrie, et qui sont disponibles avec de très faibles dispersions dimensionnelles à faible coût. On peut ainsi facilement garantir un jeu très faible et maîtrisé avec la paroi cylindrique de la chambre cylindrique d'admission.

De préférence, la chambre cylindrique d'admission a une paroi cylindrique rectifiée. On contribue ainsi à la maîtrise du jeu entre l'obturateur et la paroi cylindrique de la chambre cylindrique d'admission.

Suivant un mode de réalisation, l'axe de détection est de préférence parallèle à l'axe de la chambre cylindrique d'admission, et de préférence confondu avec l'axe de la chambre cylindrique d'admission, le codeur se déplaçant entre la première position et la deuxième position par translation le long de l'axe de détection. Le guidage d'un mouvement de translation du codeur est particulièrement simple à réaliser à faible coût, par glissement du codeur ou d'un support du codeur sur la paroi cylindrique de la chambre de détection. Dès lors que l'axe de détection et l'axe de la chambre cylindrique d'admission sont parallèles, la liaison mécanique entre le codeur et l'obturateur peut être réalisée très simplement. En prévoyant des chambres coaxiales, on évite des efforts parasites sur les parois cylindriques de la chambre cylindrique d'admission ou de la chambre de détection, ainsi que les pertes de charge liées aux changements de direction de l'écoulement, ce qui contribue à la fiabilité du dispositif de détection.

Suivant un mode de réalisation, la chambre de détection a une section transversale circulaire, le codeur présentant de préférence une symétrie de révolution autour de l'axe de détection. Une telle disposition offre l'avantage de minimiser les risques de coincement du codeur dans la chambre de détection. La symétrie de révolution du codeur garantit que sa détection par le capteur sera indépendante de sa position angulaire autour de l'axe de détection.

Suivant un mode de réalisation, le corps est constitué d'une pièce, ce qui réduit le temps de montage et la dispersion des cotes dimensionnelles. Alternativement, on peut prévoir deux pièces distinctes, ou plus, solidarisées l'une à l'autre par tout moyen approprié.

De préférence, l'orifice d'admission, l'orifice d'entrée dans la chambre de détection et l'orifice de sortie de la chambre de détection sont alignés sur l'axe de la chambre cylindrique d'admission. L'installation du dispositif est ainsi particulièrement simple dans la continuité de la conduite. Le trajet de la graisse au travers du dispositif de détection est purement axial, ce qui minimise les pertes de charge. Dans l'hypothèse d'un corps constitué d'une pièce, on peut envisager un mode de fabrication par usinage ou moulage axial.

Suivant un mode de réalisation, l'orifice d'entrée dans la chambre de détection et l'orifice de sortie de la chambre de détection sont situés de part et d'autre du codeur. On peut alors avantageusement prévoir que le codeur soit annulaire et entoure une ouverture de passage de graisse entre l'orifice d'entrée dans la chambre de détection et l'orifice de sortie de la chambre de détection. Alternativement, on peut prévoir un passage de graisse autour du codeur.

Le codeur peut être fixé au porte-codeur par tout moyen approprié, notamment par frettage ou verrouillage de forme, par exemple par encliquetage, ou encore par un ou plusieurs éléments de fixation, par collage ou soudage. Le codeur peut également constituer un insert moulé dans le porte-codeur.

Le porte-codeur peut constituer un élément séparé de l'organe élastique. Alternativement, le porte-codeur peut intégrer l'organe élastique.

De préférence, le porte-codeur comporte des ouvertures de passage de graisse pour permettre un passage de graisse de l'orifice d'entrée dans la chambre de détection à l'orifice de sortie de la chambre de détection.

De préférence, le capteur est un capteur sans contact, de préférence situé hors de la chambre de détection, de préférence dans une cavité du corps du dispositif de détection. Le capteur est ainsi protégé de la graisse. Suivant un mode de réalisation particulièrement simple, le codeur est un aimant permanent.

Suivant un mode de réalisation préféré, le corps comporte un siège de soupape annulaire situé entre l'orifice d'admission et l'orifice d'entrée dans la chambre de détection, l'obturateur venant en appui contre le siège de soupape dans la position d'obturation. On peut ainsi prévoir une précharge de l'organe élastique dans la position d'obturation de l'obturateur qui correspond à la première position du codeur.

Le signal électrique est de préférence un signal binaire, par exemple avec un premier état correspondant à la première position du codeur et un deuxième état correspondant à la deuxième position du codeur, ou avec un génération d'impulsion à chaque changement de position du codeur. Il peut également s'agir le cas échéant d'un signal analogique ou numérique à plus de deux états, le dispositif de détection étant alors apte à distinguer une ou plusieurs positions intermédiaires entre la première et la deuxième position. Le cas échéant, un circuit de prétraitement déduit de la ou des valeurs mesurées du signal une valeur binaire d'état renseignant sur l'existence ou non d'un passage de graisse, ou sur la position ouverte ou obturée de la soupape. Le circuit de prétraitement peut inclure une mémoire permettant de stocker une ou plusieurs valeurs du signal électrique, ou de la valeur binaire d'état déduite.

Suivant un mode de réalisation, le dispositif de détection d'un passage de graisse comporte en outre une butée axiale pour empêcher un mouvement axial du codeur au-delà de la deuxième position, dans la direction axiale allant de la première vers la deuxième position. Cette butée axiale est positionnée de telle manière que l'organe de rappel élastique dans la deuxième position n'obture pas le passage de la graisse vers l'orifice de sortie de la chambre de détection. En particulier, dans le cas d'un organe de rappel élastique constitué par un ressort hélicoïdal, la butée axiale assure notamment que les spires du ressort ne sont pas jointives dans la deuxième position.

La butée est de préférence une entretoise séparée du codeur et du porte-codeur. Cette entretoise peut avantageusement être disposée à l'intérieur d'un ressort hélicoïdal constituant l'organe de rappel élastique.

Suivant un mode de réalisation préféré, l'entretoise est positionnée autour de l'orifice de sortie de la chambre de détection et comporte de préférence des ouvertures de passage de graisse.

Suivant un autre aspect de l'invention, celle-ci a trait à un système de graissage d'un ou plusieurs organes de machine, intégrant un graisseur et un circuit de graissage entre le graisseur et le ou les organes de machine. Le circuit de graissage comporte un ou plusieurs dispositifs de détection d'un passage de graisse tels que décrits précédemment, disposés de préférence en série chacun entre le graisseur et un organe de machine associé parmi le ou les organes de machines.

### BRÈVE DESCRIPTION DES FIGURES

D'autres caractéristiques et avantages de l'invention ressortiront à la lecture de la description qui suit, en référence aux figures annexées, qui illustrent :
- la figure 1, un schéma de principe d'un système de graissage d'un ou plusieurs organes de machine, selon l'invention ;
- la figure 2, une vue en coupe d'un dispositif de graissage pour le système de graissage de la figure 1, suivant un premier mode de réalisation de l'invention, dans une première position ;
- la figure 3, une vue isométrique en coupe du dispositif de graissage de la figure 2, dans la première position ;
- la figure 4, une vue en coupe du dispositif de graissage de la figure 2, dans une deuxième position ;
- la figure 5, un détail de la figure 4 ;
- la figure 6, une vue en coupe d'un dispositif de graissage pour le système de graissage de la figure 1, suivant un deuxième mode de réalisation de l'invention, dans la deuxième position ;
- la figure 7, un vue isométrique d'une entretoise du dispositif de graissage de la figure 6 ;
- la figure 8, une vue en coupe d'un dispositif de graissage pour le système de graissage de la figure 1, suivant un troisième mode de réalisation de l'invention, dans la deuxième position ;
- la figure 9, un vue isométrique d'une entretoise du dispositif de graissage de la figure 8 ;
- la figure 10, une vue en coupe d'un dispositif de graissage pour le système de graissage de la figure 1, suivant un quatrième mode de réalisation de l'invention, dans la première position ;
- la figure 11, une vue en coupe d'un dispositif de graissage pour le système de graissage de la figure 1, suivant un cinquième mode de réalisation de l'invention, dans la première position; et
- la figure 12, une vue en coupe d'un dispositif de graissage pour le système de graissage de la figure 1, suivant un sixième mode de réalisation de l'invention, dans la deuxième position ;
- la figure 13, une vue en coupe d'un dispositif de graissage pour le système de graissage de la figure 1, suivant un septième mode de réalisation de l'invention, dans la première position ;
- la figure 14, un vue isométrique d'une entretoise du dispositif de graissage de la figure 13.

Pour plus de clarté, les éléments identiques ou similaires sont repérés par des signes de référence identiques sur l'ensemble des figures.

### DESCRIPTION DÉTAILLÉE DE MODES DE RÉALISATION

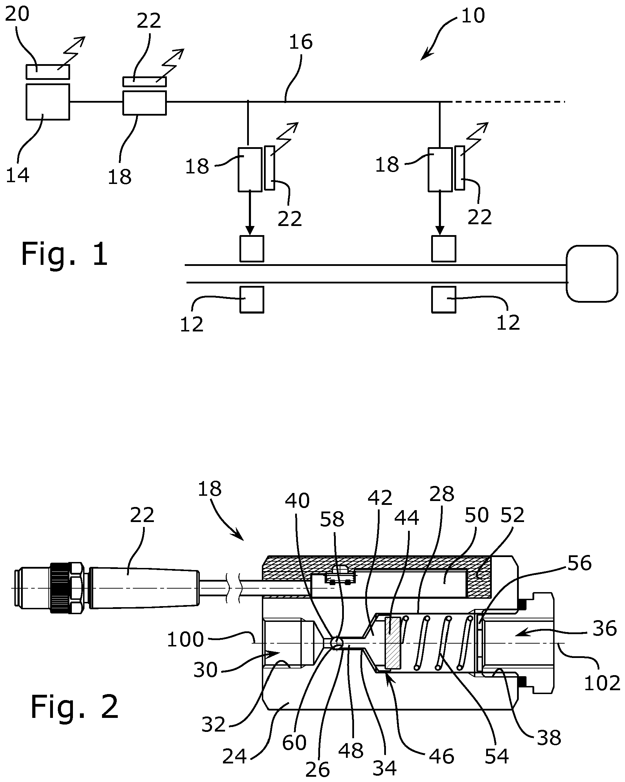

Sur la figure **1** est illustré schématiquement système de graissage **10** d'un ou plusieurs organes de machine **12,** ici des paliers, intégrant un graisseur **14** et un circuit de graissage **16** entre le graisseur **14** et le ou les organes de machine **12,** le circuit de graissage **16** intégrant des dispositifs de détection d'un passage de graisse **18,** interposés en série entre le graisseur **14** et chacun des organes de machine **12.** Les organes de machine **12** peuvent être de tout type, par exemple des paliers lisses ou à roulement, des engrenages ou des glissières. Le graisseur **14** comporte de préférence un circuit de commande **20,** qui peut intégrer une interface de communication permettant une communication filaire ou non, monodirectionnelle ou bidirectionnelle, avec une station de maintenance distante. Le circuit de commande **20** peut également comporter une interface homme-machine, par exemple un ou plusieurs voyant lumineux d'état, ou une interface de saisie d'instructions. De façon similaire, certains des dispositifs de détection **18** d'un passage de graisse peuvent comporter une interface de communication **22** avec le graisseur **14** ou avec la station de maintenance distante. Cette interface de communication **22** peut être bidirectionnelle, permettant d'interroger le dispositif de détection sur son état ou un historique de ses changements d'état, ou de préférence monodirectionnelle, le dispositif de détection **18** prenant alors l'initiative d'émettre des signaux décrivant son état ou un historique de ses changements d'état, suivant une procédure prédéterminée.

Un premier mode de réalisation du dispositif de détection **18** d'un passage de graisse est illustré sur les figures **2** à **5****.** Il comporte un corps monobloc **24** qui forme une chambre d'admission **26,** une chambre de détection **28,** un orifice d'admission **30** pourvu d'une interface filetée **32** communiquant avec une extrémité de la chambre d'admission **26,** un orifice **34** de sortie de la chambre d'admission et d'entrée dans la chambre de détection **28,** situé à l'extrémité de la chambre d'admission **26** opposée à l'orifice d'admission **30,** et un orifice **36** de sortie de la chambre de détection **28,** situé à une extrémité de la chambre de détection **28** opposée à l'orifice d'entrée **34,** et pourvu d'une interface filetée **38.**

La chambre d'admission **26** est cylindrique, à section transversale de préférence circulaire. De même, une portion au moins de la chambre de détection **28** est cylindrique, à section transversale de préférence circulaire. L'axe de symétrie **100** de la chambre d'admission **26** et l'axe de symétrie **102** de la paroi cylindrique de la chambre de détection **28** sont confondus, et les orifices d'admission **30,** d'entrée **34** dans la chambre de détection et de sortie **36** de la chambre de détection sont alignés. La chambre d'admission **26** a un diamètre intérieur plus faible que celui de la portion cylindrique de la chambre de détection **28.** La chambre d'admission **26** présente, à son extrémité proche de l'orifice d'admission **30,** un siège de soupape **40** annulaire, de préférence tronconique.

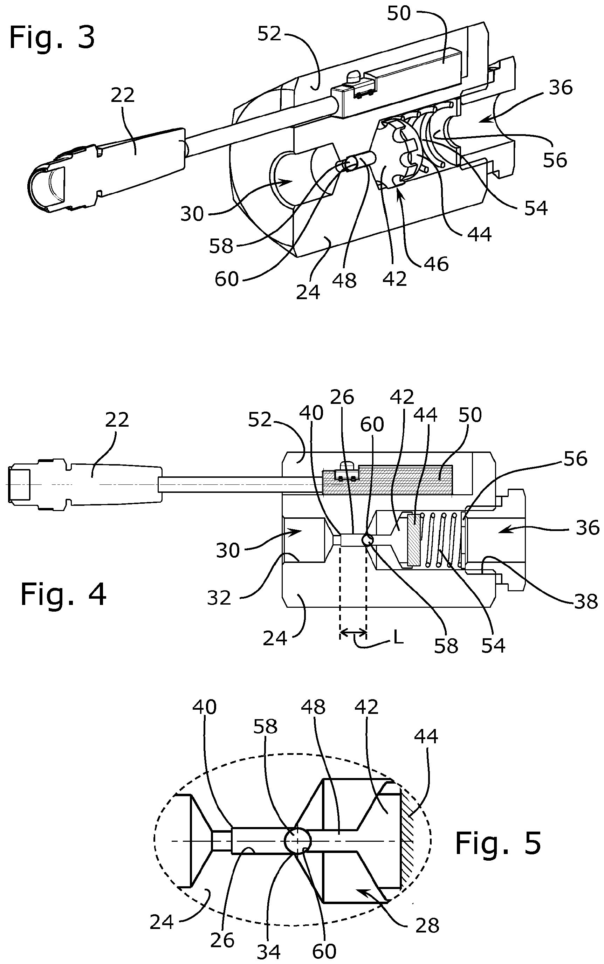

Dans la chambre de détection **28** est logé un porte-codeur **42** auquel est fixé un codeur **44** constitué ici par un aimant permanent en galette. La fixation entre le codeur et le porte-codeur peut être réalisée par tout moyen. Le porte-codeur **42** est ajouré par des ouvertures de passage de graisse **46** pour permettre un passage de graisse de l'orifice d'entrée **34** dans la chambre de détection à l'orifice de sortie **36** de la chambre de détection. Le porte-codeur **42** est conformé pour coulisser sur la paroi cylindrique de la chambre de détection **28,** entre une première position, proche de l'orifice d'entrée **34** dans la chambre de détection et illustrée sur la figure **2****,** et une deuxième position, proche de l'orifice de sortie **36** de la chambre de détection, illustrée sur la figure **3****.** La paroi cylindrique de la chambre de détection **28** est de préférence rectifiée. Le porte-codeur **42** est pourvu d'une tige **48** alignée sur l'axe **100** de la chambre d'admission **26** et qui, lorsque le porte-codeur **42** est proche de l'orifice d'entrée **34** dans la chambre de détection et de la première position, pénètre dans la chambre d'admission **26.**

Un capteur de champ magnétique **50** est disposé à l'extérieur de la chambre de détection **28,** de préférence logé dans une cavité **52** formée dans le corps **24,** et fixé au corps par tout moyen approprié. Le capteur de champ magnétique **50** est relié à l'extérieur par une interface de communication **22,** qui a été représentée ici sous forme d'un connecteur filaire.

Un organe de rappel élastique **54,** constitué ici par un ressort hélicoïdal de compression pincé entre le porte-codeur **42** et une rondelle d'appui **56** positionnée au niveau de l'orifice de sortie **36,** rappelle le porte-codeur **42** vers l'orifice d'entrée **34** dans la chambre de détection et vers la première position. La raideur du ressort est de préférence comprise entre 1,5 et 3,5 N/mm, de préférence entre 2 et 3 N/mm.

Dans la chambre d'admission **26** est logé un obturateur **58** constitué dans ce mode de réalisation par une bille. La paroi cylindrique de la chambre d'admission **26** est rectifiée et son diamètre est très légèrement supérieur à celui de la bille **58,** le jeu subsistant étant suffisamment faible pour empêcher le passage de la graisse de l'orifice d'admission **30** à la chambre de détection **28,** mais suffisamment grand pour permettre un déplacement de la bille **58** dans la chambre d'admission **26.** Typiquement le jeu est supérieur à 5µm, et de préférence inférieur à 25µm, préférentiellement inférieur à 20µm. Le siège d'extrémité **60** de la tige **48** du porte-codeur **42** est conformé en cuvette, de préférence sphérique ou conique, de rayon de courbure très légèrement supérieur à celui de la bille **58,** comme illustré sur la figure **4****.**

En l'absence de pression suffisante au niveau de l'orifice d'admission **30,** le ressort de rappel **54** repousse le porte-codeur **42,** le siège d'extrémité **60** concave de la tige **48** est en appui contre la bille **58** qui est elle-même en appui contre le siège de soupape **40.** La première position du porte-codeur est donc une position de fin de course. Dans cette position, le ressort de rappel **54** n'est que partiellement détendu, de sorte que les pièces du dispositif de détection sont maintenues en position. Dans un exemple de réalisation, le ressort de rappel **54** maintient un effort de 1N sur le siège de soupape **40.**

Lorsqu'un graissage intervient, la pression augmente brusquement dans la conduite du circuit **16** alimentant l'orifice d'admission **30.** La valeur nominale de la pression de graissage est suffisante pour vaincre l'effort exercé sur la bille **58** par le ressort de rappel **54** et repousser la bille **58** et le porte-codeur **42** en dehors de la chambre d'admission **26,** jusqu'à atteindre la deuxième position, dans laquelle les spires du ressort hélicoïdal **54** restent non jointives, le ressort hélicoïdal **54** compensant la force due à l'écoulement. La bille **58** se positionne au fond du siège d'extrémité **60** de la tige **48** du porte-codeur **42,** et pour plus d'une moitié en dehors de la chambre d'admission **26,** de sorte qu'est ouvert un passage au niveau de l'orifice d'entrée **34.** Un flux de graisse pénètre dans la chambre de détection **28** par l'orifice d'entrée **34,** traverse le porte-codeur **42** par les ouvertures de passage **46,** et ressort de la chambre de détection **28** par l'orifice de sortie **36.** L'espacement entre le siège d'extrémité **60** de la tige **48** et la paroi d'extrémité **62** de la chambre de détection **28** autour de l'orifice d'entrée **34** dans la chambre de détection est toutefois inférieur au diamètre de la bille **58,** de sorte que la bille **58** reste emprisonnée dans le logement constitué par la cuvette d'extrémité de la tige, comme illustré sur la figure **5****.**

Lorsque s'achève l'impulsion de graissage, le flux cesse et permet au ressort de rappel **54** de repousser le porte-codeur **42** et la bille **58** jusqu'à la première position, ramenant le dispositif dans son état initial. Le cas échéant, l'orifice d'entrée **34** dans la chambre de détection peut être chanfreiné, pour guider la bille lors de son entrée dans la chambre d'admission **26.**

Le mouvement du codeur **44** fixé au porte-codeur **42** de la première à la deuxième position est détecté par le capteur **50,** ainsi que le retour vers la première position. Le signal électrique du capteur **50** peut être traité localement ou lu tel quel par un circuit électrique de mesure. Il peut être ensuite transmis par l'interface de communication **22.**

Entre la position d'obturation et la position d'ouverture, la bille parcourt une course L d'au moins 3 mm, préférentiellement d'au moins 5 mm, , de préférence au plus **10**mm. Cette course de la bille correspond à la course du porte-codeur entre la première et la deuxième position et permet une bonne détection, du déplacement sur une large plage de température.

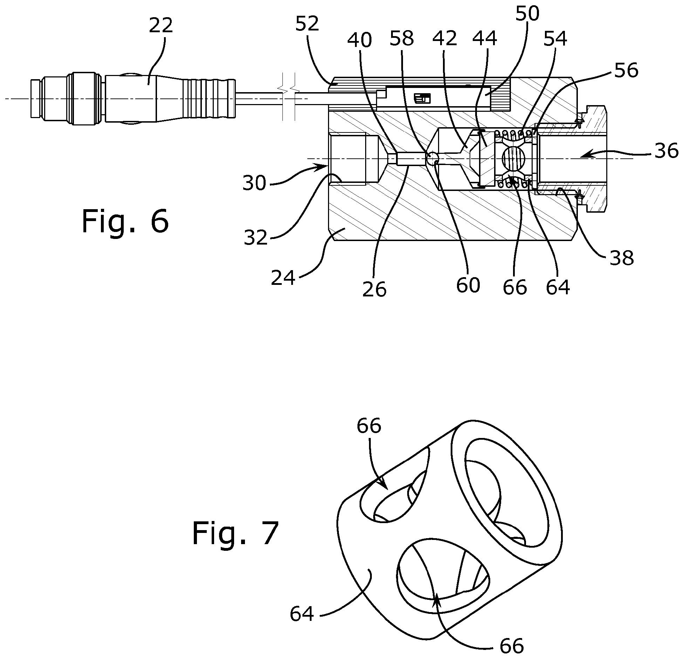

Suivant un deuxième mode de réalisation illustré sur la figure **6****,** une entretoise **64** est positionnée dans la chambre de détection **28,** entre le codeur **44** et la rondelle d'appui **56,** à l'intérieur du ressort de rappel **54.** Cette entretoise constitue une butée de fin de course rapportée dans le corps **24,** sur laquelle vient s'appuyer le codeur **44** ou le porte-codeur **42** dans la deuxième position. On évite ainsi le risque qu'une trop grande impulsion de pression de graisse fasse s'échapper la bille **58.** On évite également que l'organe de rappel, ici constitué par un ressort hélicoïdal **54,** atteigne une position à spire jointive, qui empêcherait l'écoulement de la graisse. L'entretoise **64** est constituée par une bague présentant des ouverture radiales **66,** constituées ici par des perçages visibles sur la figure **7****.** Les ouvertures **66** permettent d'assurer un chemin de passage pour la graisse vers l'orifice de sortie **36.**

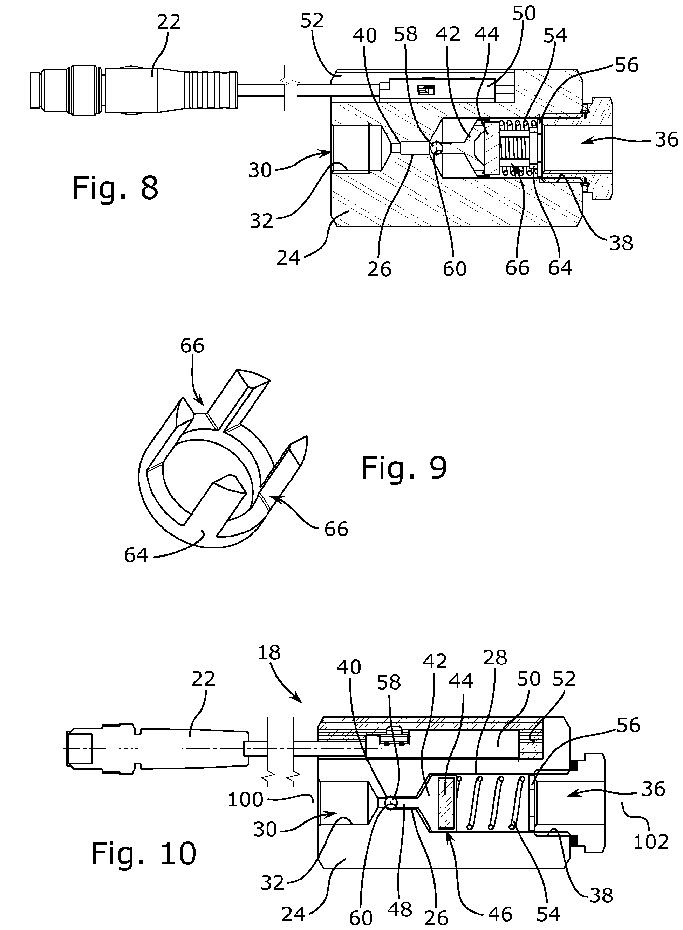

Suivant un troisième mode de réalisation illustré sur les figures **8** et **9****,** les ouvertures radiales **66** de l'entretoise **64** sont de forme générale rectangulaire et s'ouvrent également à une extrémité axiale de l'entretoise. Cette forme est propice à une réalisation de l'entretoise **64** par découpe d'une bague en deux passes d'une fraise positionnée suivant un premier diamètre de la bague puis un deuxième diamètre perpendiculaire au premier, et s'enfonçant depuis l'extrémité axiale de la bague vers l'intérieur parallèlement à la direction axiale de la bague constitutive de l'entretoise **64.**

Suivant un quatrième mode de réalisation, du dispositif de détection **18,** illustré sur la figure **10****,** le porte-codeur **42** est surmoulé autour du codeur **44.**

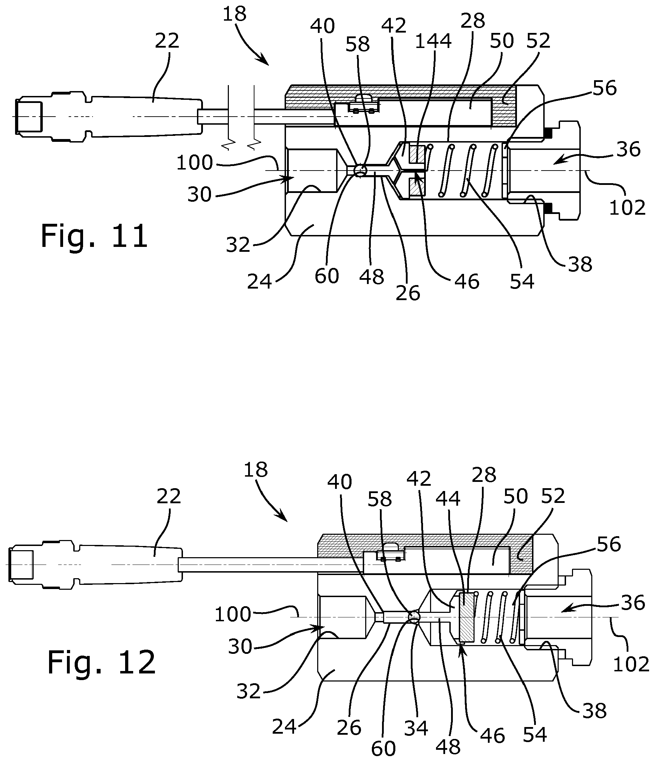

Suivant un cinquième mode de réalisation, illustré sur la figure **11****,** le codeur **44** est annulaire et présente une ouverture centrale **144** de passage de la graisse, communiquant avec d'une ou plusieurs ouvertures de passage formées sur le porte-codeur **42.**

Suivant un sixième mode de réalisation, illustré sur la figure **12****,** l'orifice d'entrée **34** dans la chambre de détection est chanfreiné, pour guider la bille lors de son entrée dans la chambre d'admission **26.** La chambre de détection **38** comporte ainsi une préchambre tronconique **138,** formée par l'orifice d'entrée **34,** et servant au maintien de la bille **58.**

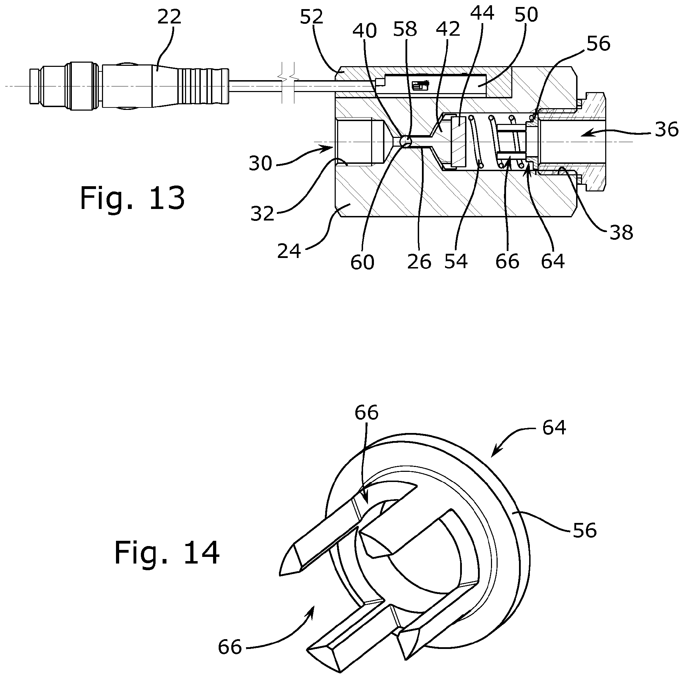

Suivant un septième mode de réalisation, illustré sur la figure 13, l'entretoise **64** intègre la rondelle d'appui **56** positionnée au niveau de l'orifice de sortie **36,** et constitue ainsi un guidage complet pour le ressort hélicoïdal **54.**

Naturellement, les exemples représentés sur les figures et discutés ci-dessus ne sont donnés qu'à titre illustratif et non limitatif. Il est explicitement prévu que l'on puisse combiner entre eux les différents modes de réalisation illustrés pour en proposer d'autres.

Il est souligné que toutes les caractéristiques, telles qu'elles se dégagent pour un homme du métier à partir de la présente description, des dessins et des revendications attachées, même si concrètement elles n'ont été décrites qu'en relation avec d'autres caractéristiques déterminées, tant individuellement que dans des combinaisons quelconques, peuvent être combinées à d'autres caractéristiques ou groupes de caractéristiques divulguées ici, pour autant que cela n'a pas été expressément exclu ou que des circonstances techniques rendent de telles combinaisons impossibles ou dénuées de sens.

## Revendications

1. Dispositif de détection (18) d'un passage de graisse, comportant :
- un corps (24) comprenant une paroi cylindrique de guidage délimitant une chambre de détection (28) et définissant un axe de détection (102), le corps (24) comprenant un orifice d'entrée dans la chambre de détection (34) et un orifice de sortie de la chambre de détection (36),
- un codeur (44,) supporté par un porte-codeur (42) en contact glissant avec une paroi cylindrique de guidage de la chambre de détection (28) pour guider le codeur (44,) axialement dans la chambre de détection (28) au moins entre une première position et une deuxième position,
- un organe de rappel élastique (54) rappelant le codeur (44,) vers la première position,
- un capteur (50) solidaire du corps (24) et apte à générer un signal électrique lorsque le codeur (44) passe de la première position à la deuxième position,
**caractérisé en ce que** :
- le corps (24) comprend en outre un orifice d'admission (30) et une chambre cylindrique d'admission (26) débouchant dans la chambre de détection (28) par l'orifice d'entrée dans la chambre de détection (34) et constituant un passage de graisse entre l'orifice d'admission (30) et l'orifice d'entrée dans la chambre de détection (34),
- le dispositif de détection (18) comporte en outre un obturateur (58) séparé du porte-codeur, en appui contre le porte-codeur, et mobile axialement entre une position d'obturation à l'intérieur de la chambre cylindrique d'admission (26) et une position d'ouverture au moins partiellement dans la chambre de détection (28), le codeur (44) étant positionné par rapport à l'obturateur (58) de sorte que l'obturateur (58) se déplaçant de la position d'obturation vers la position d'ouverture pousse le codeur (44) de la première position à la deuxième position, et que le du codeur (44) se déplaçant de la deuxième position à la première position pousse l'obturateur (58) de la position d'ouverture à la position d'obturation, les dimensions de l'obturateur (58) et de la chambre cylindrique d'admission (26) étant telles que l'obturateur (58) obture le passage de graisse entre l'orifice d'admission (30) et l'orifice d'entrée dans la chambre de détection (34) lorsqu'il se trouve dans la chambre cylindrique d'admission (26), le porte-codeur (44) comportant un siège de maintien (60), pour maintenir l'obturateur (58) dans la position d'ouverture lorsque le codeur (44) est dans la deuxième position.

2. Dispositif de détection d'un passage de graisse selon l'une quelconque des revendications précédentes, **caractérisé en ce que** la chambre cylindrique d'admission (26) a une section transversale circulaire, l'obturateur (58) ayant une section transversale circulaire.

3. Dispositif de détection d'un passage de graisse selon la revendication 2, **caractérisé en ce que** l'obturateur (58) comporte une bille (58), de préférence une bille métallique, de préférence une bille d'acier.

4. Dispositif de détection d'un passage de graisse selon l'une quelconque des revendications précédentes, **caractérisé en ce que** l'axe de détection (102) est parallèle à l'axe de la chambre cylindrique d'admission (26), et de préférence confondu avec l'axe (100) de la chambre cylindrique d'admission (26).

5. Dispositif de détection d'un passage de graisse selon la revendication 4, **caractérisé en ce que** la chambre de détection (28) a une section transversale circulaire, le codeur (44) présentant de préférence une symétrie de révolution autour de l'axe de détection (102).

6. Dispositif de détection d'un passage de graisse selon l'une quelconque des revendications précédentes, **caractérisé en ce que** le corps (24) est constitué d'une pièce.

7. Dispositif de détection d'un passage de graisse selon l'une quelconque des revendications précédentes, **caractérisé en ce que** l'orifice d'admission (30), l'orifice d'entrée dans la chambre de détection (34) et l'orifice de sortie de la chambre de détection (36) sont alignés sur l'axe (100) de la chambre cylindrique d'admission (26).

8. Dispositif de détection d'un passage de graisse selon l'une quelconque des revendications précédentes, **caractérisé en ce que** l'orifice d'entrée dans la chambre de détection (34) et l'orifice de sortie de la chambre de détection (36) sont situés à distance l'un de l'autre le long de l'axe de détection, de part et d'autre du codeur (44).

9. Dispositif de détection d'un passage de graisse selon la revendication 8, **caractérisé en ce que** le codeur (44) est annulaire et entoure une ouverture (144) de passage de graisse entre l'orifice d'entrée dans la chambre de détection (34) et l'orifice de sortie de la chambre de détection (36).

10. Dispositif de détection d'un passage de graisse selon l'une quelconque des revendications précédentes, **caractérisé en ce que** le porte-codeur (42) comporte des ouvertures de passage de graisse (46) pour permettre un passage de graisse de l'orifice d'entrée dans la chambre de détection (34) à l'orifice de sortie de la chambre de détection (36).

11. Dispositif de détection d'un passage de graisse selon l'une quelconque des revendications précédentes, **caractérisé en ce que** le capteur (50) est un capteur sans contact, de préférence situé hors de la chambre de détection, de préférence dans une cavité du corps du dispositif de détection.

12. Dispositif de détection d'un passage de graisse selon l'une quelconque des revendications précédentes, **caractérisé en ce que** le corps (24) comporte un siège de soupape annulaire (40) situé entre l'orifice d'admission (30) et l'orifice d'entrée dans la chambre de détection (34), l'obturateur (58) venant en appui contre le siège de soupape (40) dans la position d'obturation.

13. Dispositif de détection d'un passage de graisse selon l'une quelconque des revendications précédentes, **caractérisé en ce qu'**il comporte en outre une butée axiale pour empêcher un mouvement axial du codeur au-delà de la deuxième position, dans la direction axiale allant de la première vers la deuxième position

14. Dispositif de détection d'un passage de graisse selon revendication 13, **caractérisé en ce que** la butée axiale est une entretoise (64) séparée du codeur et du porte-codeur, de préférence positionnée autour de l'orifice de sortie de la chambre de détection (36), l'entretoise comportant de préférence des ouvertures de passage de graisse.

15. Système de graissage (10) d'un ou plusieurs organes de machine (12), intégrant un graisseur (14) et un circuit de graissage (16) entre le graisseur (14) et le ou les organes de machine (12), **caractérisé en ce que** le circuit de graissage (14) comporte un ou plusieurs dispositifs de détection d'un passage de graisse (18) selon l'une quelconque des revendications précédentes, disposés de préférence en série chacun entre le graisseur (14) et un organe de machine associé parmi le ou les organes de machines (12).
